# EUROPEAN PATENT APPLICATION

(11) **EP 1 455 295 A2**
(43) Date of publication of application: **08.09.2004**
(21) Application number: 04250636.0
(22) Date of filing: 06.02.2004
(51) Int. Cl.: G06F 17/60

(54) **Communications apparatus and method**

(30) Priority: 07.02.2003 GB 0302839
(71) Applicant: First Global Technologies Limited, Tortola (VG)
(72) Inventor: Sebire, Chris, Brill Bucks HP18 0TJ (GB)
(74) Representative: Downing, Michael Philip

(57) **Abstract**

Most businesses have spare capacity that, if sold, can generate marginal profit without significant cost. In the past it has been difficult for businesses to achieve this in a timely manner. A communications apparatus is described, which comprises a database storing records of service providers, service types, contact details and time denominated availability, a query agent arranged to accept details of a service request from a service requestor including the nature and time of the requested service and to locate records where the service type and time data match the service request, and a delivery means adapted to pass at least the contact details of the service provider or service requestor to the service requestor or service provider, respectively. It is preferred that the records include location data such as postcodes. The delivery means preferably includes an SMS gateway and/or an email server. It is preferred that the query agent is arranged to accept incoming service requests and incoming service availability information from an SMS gateway. A parsing agent can be provided between the SMS gateway and the query agent.

## Description

### FIELD OF THE INVENTION

The present invention provides a means of communication. It is particularly (but not exclusively) concerned with exchanging information as to availability of service staff and the need for their services.

### BACKGROUND ART

Most businesses have spare capacity that, if sold, can generate marginal profit without significant cost. In the past it has been difficult for businesses to achieve this in a timely manner.

Information as to excess capacity is by its nature time-sensitive and for its dissemination requires a technology platform designed to allow sellers to promote and display trade opportunities of their spare capacity to buyers in a simple fashion that can be executed quickly, easily and using apparatus that is easily to hand such as the Internet and mobile telephone handsets. Anything that expedites communication between buyers and sellers can give a huge competitive advantage to either or both the buyer and seller.

This places unique technical demands on a communications system that have not hitherto been addressed. The internet and web are suited to this task in that access is now possible from a wide variety of locations and via a wide variety of devices, including mobile devices. Existing business directories are however in a substantially static form that mirrors an off-line directory albeit with easier searching facilities. Such directories are not suited to the display of temporary excess capacity.

### SUMMARY OF THE INVENTION

The present invention therefore provides a communications apparatus comprising a database storing records of service providers, service types, contact details and time denominated availability, a query agent arranged to accept details of a service request from a service requestor including the nature and time of the requested service and to locate records where the service type and time data match the service request, and a delivery means adapted to pass at least the contact details of the service provider or service requestor to the service requestor or service provider, respectively.

It is preferred that the details of the service request are entered as a record in the database and that the apparatus includes a change detection agent adapted to act upon a change in the database and seek matching service requests and service providers. In this way, a service request can be lodged and can trigger notifications at a later time (within the time frame of the request) if service providers are subsequently entered into the database.

It is also preferred that the records include location data such as postcodes. This can then be taken into account so that otherwise matching records but with dissimilar postcodes are ignored.

The delivery means preferably includes an SMS gateway and/or an email server. This will allow details of matches to be sent to the provider or requestor via SMS and/or email.

It is preferred that the query agent is arranged to accept incoming service requests and incoming service availability information from an SMS gateway. A parsing agent can be provided between the SMS gateway and the query agent. This can identify the sender of the message from the SMS caller ID, using contact information in the database. The parsing agent can seek some or (preferably) all of preset codes in the SMS text corresponding to;
i. service types
ii. whether the message relates to a request or availability
iii. date information
iv. time information, and
v. location information

It is preferred that the parsing agent has access to defaults for the date information, time information, service type and location. Examples for the date and time are "today" and "all day" respectively. The defaults for the service type and location are preferably held in the database together with other information relating to the provider or requestor. Examples would then include the usual line of business and home or base location of a provider and the last service type and location of a requestor.

### BRIEF DESCRIPTION OF THE DRAWINGS

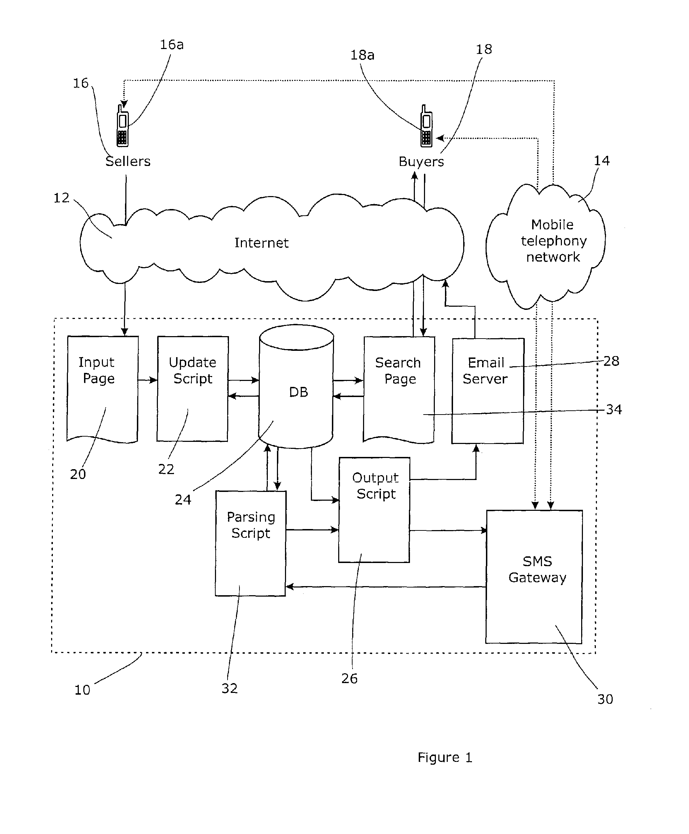

An embodiment of the present invention will now be described by way of example, with reference to the accompanying figure 1 which is a diagrammatic representation of the system.

### DETAILED DESCRIPTION OF THE EMBODIMENT

The invention addresses the problem of communicating the short-term availability of services to potential purchasers and the existence of such purchasers to potential providers. It provides businesses with a tool to quickly promote the sale of spare capacity, and allows buyers to access potential discounts for such time. The backbone of the service is a stand alone technical solution that incorporates email and mobile communication platforms as well as simple seller content management of the trade opportunities.

It is not presently intended that the system be linked to the end fulfilment of transactions. Instead, the service will ideally be free to registering buyers to allow free online viewing of all available opportunities. Notifications via SMS will however be reversed billed to buyer's mobile phones. Sellers will be charged an initial fee per location and listing, with each message charged for.

Potential customers can view all opportunities (offered or requested) but cannot view contact details or names without a registration to viewing rights.

An important and useful aspect of the invention is the seamless integration of mobile SMS technology with the web-based system. The speed of and ease of communication that this allows makes quick promotion, selling and buying possible using the system. It also allows for fully automated finding of potential buyers and sellers - and therefore securing buyers or opportunities without effort on the participant's side.

The other unique aspects of the technology are:
- End User Seller Control - User friendly SMS & Web Templates to activate promotions
- End User Buyer Control - Real time service requests via SMS, Email and Web display
- Postcode driven data management and search
- Seamlessly integrated web database, content management and multiple real time communication platforms

### OVERVIEW

The present invention revolves around the innovative use of different communication channels, enabling people to communicate via disparate technologies and means but all using the underlying internet infrastructure.

The users of the system are (effectively) using and manipulating a central database held on servers connected to the internet. A change in the database then triggers and reflects multiple changes and events. These range from a change to the website, to SMS messages and emails being sent. An important point is that this can all be controlled and triggered via different means: web, email and inbound SMS. Voice recognition could also be used.

### TECHNICAL

The layout includes the following:
- A database on the internet
- A webserver on the internet
- Scripts (code), also on the internet, for updating the database
- SMS Gateways: services which route SMS messages (inbound and outbound) between mobile telephone handsets (or devices having such functionality) and the internet. These may be integrated or provided by suitable third party servers.

The outbound SMS and email functionality is quite straightforward. If, for example, a seller goes to the website, logs in, and says that he has spare capacity available tomorrow afternoon (via filling out online forms on the website) then this is recorded in the database. Actions are then triggered: all buyers who match the seller's offer are notified via email and/or SMS (using the gateway), and the website is changed so that people who are browsing the website will see the offer. A buyer can carry out similar actions. This is, effectively, using the website to 'control' communication.

The handling of inbound SMS messages is an important aspect of the system. This allows, for example, a seller to indicate that he has spare capacity on a certain date by sending an SMS message. This message is picked up by the gateway and forwarded to a script on the server. The server then takes the SMS and parses it. The script can identify who the sender is via the caller id; on registration the seller will have given their phone number, which can then be looked up in the database.

The message can then be parsed using preset rules to ascertain the nature of the seller's availability. For example, if the message contains nothing at all then the script can assume that the sender wants to activate a default service (defined on registration) for the same day as the message is sent. This allows the most common change to be made via the simplest message.

If the script only contains an activation code (i.e. a code indicating a specific activity) then the scripts will assume that this is the activity that the seller wants to make available for that day. If an activity and a date are found then the script will assume that the activity is for that particular date. Finally, a time can also be specified. This means that the most common requirements can be asked for with the least amount of text from the seller.

Once the SMS message has been parsed and understood the script will then enter the correct requirements into the database. This then triggers the usual actions of sending out SMS messages and emails to customers who match the seller's offer. Again this allows end-to-end communication through the internet but without (necessarily) any internet device on both ends. The website also changes to reflect a request made via SMS.

This means that the following modes of communication are possible:
- sms -> internet -> sms
- sms -> internet -> web
- sms -> internet -> email
- web -> internet -> sms
- web -> internet -> web
- web -> internet -> email
- email -> internet -> sms
- email -> internet -> web
- email -> internet -> email

Referring to Figure 1, an embodiment of the invention is shown in diagrammatic form. The system 10 uses the internet 12 and mobile telephony networks 14 to connect to users, who can be generally classified as sellers 16 and buyers 18. Each group is assumed to have access to a mobile telephone handset 16a, 18a.

When a seller has spare time that they wish to make available through the communications system shown, they have two main options for communicating this. The first is to browse via the internet 12 to an input web page 20 which will contain the necessary fields to identify the user 18, authenticate them, and take details of when they are available and for what services. This information is then passed to an update script 22, which inserts the information as a record in the database 24.

The other way for sellers to add information to the database is via SMS. This is a useful addition in that many service providers work away from a central office and thus may not have local web access. It is however very likely that they will have a mobile telephone handset. To use this route, an SMS message is sent via the handset 16a and the network 14 to the SMS gateway 30. As this is an incoming message, it is transferred to a parsing script 32. This script 32 interprets the message as described above and makes the appropriate change to the database 24.

For example, the SMS message:
TUE PM
would be interpreted to indicate that the seller from whose mobile telephone the message was sent was available for their default service during the afternoon of the following Tuesday, or the same day if it was transmitted on a Tuesday. Likewise, the SMS message:
PM
would be interpreted to indicate that the seller from whose mobile telephone the message was sent was available for their default service during the afternoon of the day that the message was transmitted.

In this way, the necessary content can be communicated to the system in a reliable manner using only a very short SMS message.

The change in the database content, by either route, causes an output script 26 to search for any matching buyer/seller records - i.e. to look for any previous requests by buyers that match the new seller availability. If there are matches then the output script 26 can send messages by email using an email server 28 and/or by SMS via an SMS gateway 30. The preferred form of communication and the appropriate contact details will have been provided by the users on first registration. These messages will contain the contact details of the other party and can be sent to either seller or buyer as preferred.

If a buyer wishes to seek a seller in order to perform a specific service then they can visit the search web page 34. This will accept details of the buyer including email addresses and mobile telephone numbers and details of the type of service and the desired time intervals. The database 24 is then searched to locate corresponding seller records and the buyer will be informed as to whether there are any matches.

If there are matches then the buyer will be invited to accept an SMS message with the contact details. This is advantageous since the SMS message can contain the telephone numbers of the seller, enabling the buyer to call them direct without re-keying of the number. It also offers an opportunity to raise revenue in that the SMS messages will be charged to the recipient. Alternatively, the information could be displayed via the web page instead of or in addition to the SMS message. If no SMS message is sent then the charge could be levied to an account held on behalf of the user.

If there are no matches then the buyer details can be retained for comparison with seller records added to the database at a later time or date.

An alternative way of requesting services is for a buyer to send an SMS message via the mobile telephone handset 18a and the mobile telephone network 14 to the SMS gateway 30. This message is then transferred to the parsing script 32 which can then interpret the message and search for corresponding seller records. If such records exist then a reply SMS message can be sent as above. If not, then the buyer details can be added to the databse 24 using the SMS caller id as the identification of the buyer.

Thus, the SMS message:
RQ PLUMB TUE PM
would be interpreted to mean that a person was requesting (RQ) a plumber (PLUMB) during the afternoon (PM) of the following Tuesday (TUE) or the same day if the date of transmission was a Tuesday. Alternatively, the parsing script 32 could be programmed to assume that the message was from a buyer if there was a specification of the service type.

The service types will probably need to be set out as text abbreviations and made available via the system website. Alternatively, or in addition, a dictionary lookup can be used to identify likely terms.

It will be appreciated by those skilled in the art that whilst various agents, servers, and scripts have been described above, these need not be provided as separate entities. They may be implemented (for example) as separate programs running on physically different processors, or as separate programs running on the same processor, or as modules of the same program, or as processes within the same program.

This invention does not affect the manner in which business is done between the parties involved. Accordingly, it does not relate to the method by which they do business or seek to affect the contract negotiations between the parties. What it does is to provide an improved and timely method and means for communication between those parties so that they can be identified and contacted with a view to potentially doing business.

It will of course be understood that many variations may be made to the above-described embodiment without departing from the scope of the present invention.

## Claims

1. A communications apparatus comprising:
a database storing records of service providers, service types, contact details and time denominated availability,
a query agent arranged to accept details of a service request from a service requestor, including the nature and time of the requested service, and to locate records where the service type and time data match the service request, and
a delivery means adapted to pass at least the contact details of the service provider or service requestor to the service requestor or service provider, respectively.

2. A communications apparatus according to claim 1 in which the details of the service request are entered as a record in the database, further comprising a change detection agent adapted to act upon a change in the database and seek matching service requests and service providers.

3. A communications apparatus according to claim 1 or claim 2 in which the database records include location data.

4. A communications apparatus according to claim 3 in which the location data is taken into account so that otherwise matching records but with dissimilar postcodes are ignored.

5. A communications apparatus according to any one of the preceding claims in which the delivery means includes an SMS gateway.

6. A communications apparatus according to any one of the preceding claims in which the delivery means includes an email server.

7. A communications apparatus according to any one of the preceding claims in which the query agent is arranged to accept incoming service requests and/or incoming service availability information from an SMS gateway.

8. A communications apparatus according to claim 7 in which a parsing agent is provided between the SMS gateway and the query agent.

9. A communications apparatus according to claim 8 in which the parsing agent identifies the sender of the message from the SMS caller ID.

10. A communications apparatus according to claim 9 in which the identification uses contact information in the database.

11. A communications apparatus according to any one of claims 8 to 10 in which the parsing agent seeks one of a plurality of preset codes in the SMS text.

12. A communications apparatus according to claim 11 in which the plurality of preset codes includes a code corresponding to service type.

13. A communications apparatus according to claim 11 or claim 12 in which the plurality of preset codes includes a code corresponding to whether the message relates to a request or availability.

14. A communications apparatus according to any one of claims 11 to 13 in which the plurality of preset codes includes a code corresponding to date.

15. A communications apparatus according to any one of claims 11 to 14 in which the plurality of preset codes includes a code corresponding to time.

16. A communications apparatus according to any one of claims 11 to 15 in which the plurality of preset codes includes a code corresponding to location.

17. A communications apparatus according to claim 12 in which the parsing agent has access to a default for the service type.

18. A communications apparatus according to claim 17 in which the default for the service type is held in the database.

19. A communications apparatus according to claim 12 in which the parsing agent infers a default for whether the message relates to a request or a provider according to the content of the database.

20. A communications apparatus according to claim 14 in which the parsing agent has access to a default for the date information.

21. A communications apparatus according to claim 15 in which the parsing agent has access to a default for the time information.

22. A communications apparatus according to claim 16 in which the parsing agent has access to a default for the location.

23. A communications apparatus according to claim 22 in which the default for the location is held in the database.

24. A communications method comprising the steps of:
providing a database storing records of service providers, service types, contact details and time denominated availability,
providing a query agent;
accepting details of a service request from a service requestor, including the nature and time of the requested service, and;
locating records where the service type and time data match the service request;
delivering at least the contact details of the service provider or service requestor to the service requestor or service provider, respectively.
